(19) Europäisches Patentamt / European Patent Office / Office européen des brevets

(11) **EP 4 614 216 A1**

(12) **EUROPEAN PATENT APPLICATION**

(43) Date of publication:
**10.09.2025 Bulletin 2025/37**

(21) Application number: **24315084.4**

(22) Date of filing: **07.03.2024**

(51) International Patent Classification (IPC):
*G02F 1/01* (2006.01)

(52) Cooperative Patent Classification (CPC):
**G02F 1/0147; G02F 1/011**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Université Grenoble Alpes**
  **38400 Saint-Martin-d'Hères (FR)**
• **Centre National de la Recherche Scientifique**
  **75016 Paris (FR)**

• **Institut Polytechnique de Grenoble**
  **38000 Grenoble (FR)**
• **Université Savoie Mont Blanc**
  **73011 Chambéry Cedex (FR)**

(72) Inventor: **Pavanello, Fabio**
  **38000 GRENOBLE (FR)**

(74) Representative: **Hautier IP**
  **20, rue de la Liberté**
  **06000 Nice (FR)**

(54) **PHOTONIC MULTI-LEVEL DEVICE**

(57)    It is provided a photonic multi-level device 1 comprising:

a. a waveguide 11 into which light is dedicated to travel along a main optical propagation direction 10,

b. a phase change material patch 12, hereafter PCM patch, on the waveguide 11,

c. an electro-thermal switching 13, e.g., a heater, in the vicinity of said PCM patch 12,

wherein at least one among the waveguide 11, the PCM patch 12 and the electro-thermal switching 13 has a cross-section that varies along the main optical propagation direction 10.

Thus, the present invention deals with novel designs for photonic multi-level devices that permit to modify in a compact, multi-level, reliable, and controllable way the device optical response.

Fig. 8

**Description**

**TECHNICAL FIELD**

The disclosure relates broadly to photonic multi-level devices and to photonic systems comprising at least one of said photonic multi-level devices.

The invention more particularly relates to a photonic multi-level device comprising:

a. a waveguide into which light is dedicated to travel along a main optical propagation direction,
b. a phase change material patch, hereafter PCM patch, on the waveguide,
c. an electro-thermal switching, e.g., a heater, in the vicinity of said PCM patch.

We mean by "in the vicinity of" that the electro-thermal switching is sufficiently close to the PCM patch for being able to induce phase transition from amorphous to crystalline and vice versa of the PCM patch.

We mean by "PCM patch" a shape based of a phase change material (PCM) which is obtained from a PCM layer that is etched or deposited in a pre-shaped geometry and it is generally thin (compared to the optical waveguide thickness) to induce a perturbation of the optical mode in the optical waveguide.

**BACKGROUND**

Phase-change materials (PCMs) are a peculiar class of materials that showcases a large difference in electrical and optical properties depending on their phase, whether crystalline or amorphous. These materials can be integrated within a dielectric stack and have been already used in a variety of applications ranging from rewriteable CDs to neuromorphic computing, imaging systems, and switches/routers (See i) M. Wuttig, H. Bhaskaran, and T. Taubner, "Phase-change materials for non-volatile photonic applications," Nat. Photonics, vol. 11, no. 8, Art. no. 8, Aug. 2017, doi: 10.1038/nphoton.2017.126.; ii) M. Wuttig and N. Yamada, "Phase-change materials for rewriteable data storage," Nat. Mater., vol. 6, no. 11, pp. 824-832, Nov. 2007, doi: 10.1038/nmat2009; iii) J. Feldmann et al., "Parallel convolutional processing using an integrated photonic tensor core," Nature, vol. 589, no. 7840, pp. 52-58, Jan. 2021, doi: 10.1038/s41586-020-03070-1). In particular, these materials can be integrated as thin films on top of optical waveguides and can be used to locally modify the complex (real and imaginary) effective index of the optical modes propagating along these waveguides according to their phase (See C. Rios et al., "Integrated all-photonic non-volatile multi-level memory," Nat. Photonics, vol. 9, no. 11, pp. 725-732, Nov. 2015, doi: 10.1038/nphoton.2015.182). Such modifications lead to a change in absorption and phase for the optical modes within the waveguide where the PCM patch has been integrated.

To achieve the switching between the PCM stable phases i.e., crystalline and amorphous, it is necessary to increase the PCM temperature above a certain threshold; if starting from a crystalline state, it is necessary to achieve a temperature above the melting temperature $T_{melt}$ of the PCM; if instead the initial phase is amorphous, it is then necessary to go beyond the glass temperature $T_{glass}$ of the PCM to achieve a transition to a crystalline state. The duration of each phase transition depends on the specific PCM compound as well as the thermal boundary conditions and the specific transition i.e., from crystalline to amorphous or vice versa (See M. Wuttig and N. Yamada, "Phase-change materials for rewriteable data storage," Nat. Mater., vol. 6, no. 11, pp. 824-832, Nov. 2007, doi: 10.1038/nmat2009).

The switching of the material (and its consequent temperature increase) can be carried out either by applying electrical stimuli e.g., by sending short electrical pulses, either by optical stimuli e.g., by sending short optical pulses (See i) W. Zhou et al., "In-memory photonic dot-product engine with electrically programmable weight banks," Nat. Commun., vol. 14, no. 1, p. 2887, May 2023, doi: 10.1038/s41467-023-38473-x; ii) J. Feldmann, N. Youngblood, C. D. Wright, H. Bhaskaran, and W. H. P. Pernice, "All-optical spiking neurosynaptic networks with self-learning capabilities," Nature, vol. 569, no. 7755, pp. 208-214, May 2019, doi: 10.1038/s41586-019-1157-8). Each of these driving methods has its own advantages and disadvantages. For driving approaches based on electrical stimuli, an electro-thermal switching; e.g., a heater, is generally embedded in proximity of the PCM patch and then, by Joule heating, the PCM patch is heated up to the required threshold temperature and kept constant during the transition from crystalline to amorphous to take into account the latent heat of fusion at $T_{melt}$ or during the transition from amorphous to crystalline to allow full crystallization above $T_{glass}$. An important aspect is the cooling speed of the device which shall be (for a crystalline to amorphous transition) close to or above 1 K/ns depending on the specific PCM [1]

One of the main uses of devices integrating PCM patches consists of changing their performance/response level by level in order to encode information onto their configuration e.g., ratio of amorphous vs crystalline material, that can be later retrieved by electrical or optical means or used to perform operations in e.g., the optical domain (See C. Ríos et al., "Integrated all-photonic non-volatile multi-level memory," Nat. Photonics, vol. 9, no. 11, pp. 725-732, Nov. 2015, doi: 10.1038/nphoton.2015.182). However, due to the stochastic nature of the phase change process and dependence on grain dimensions, a reliable and precise control of the transition for such devices is not simple to achieve due to the interplay of pulse duration and power (See C. Zhang et al., "Nonvolatile Multilevel Switching of Silicon Photonic Devices with In2O3/GST Segmented Structures," Adv. Opt. Mater., vol. 11, no. 8, p. 2202748, 2023, doi: 10.1002/adom.202202748). In fact, previous works have shown a small number of bits (levels) that could be exploited e.g.:

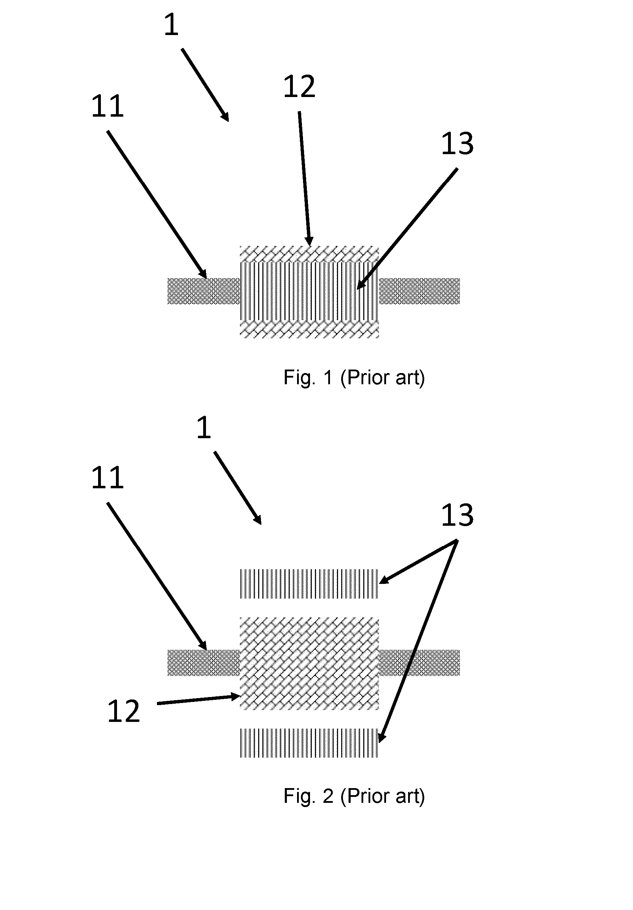

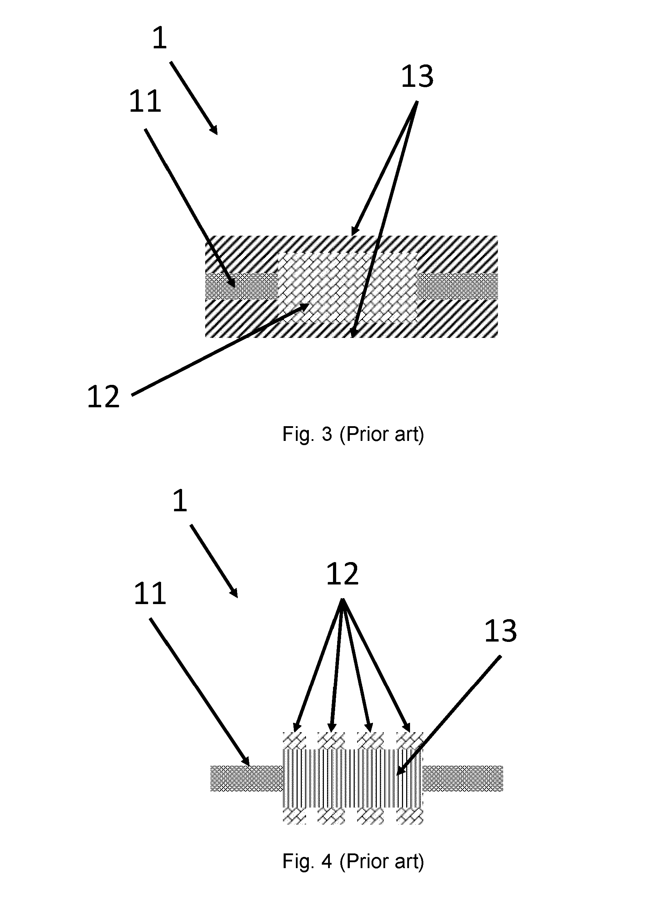

- 3 bits (8 levels) by using a pair of uniform (same cross-section along the propagation direction) top (see Figure 1) or lateral heaters (see Figure 2) (See M. Miscuglio et al., "Artificial Synapse with Mnemonic Functionality using GSST-based Photonic Integrated Memory," p. 8),
- 4 bits (16 levels) by using a p++ doped silicon rib waveguide as heater where the PCM is integrated on top of it (see Figure 3) (See W. Zhou et al., "In-memory photonic dot-product engine with electrically programmable weight banks," Nat. Commun., vol. 14, no. 1, p. 2887, May 2023, doi: 10.1038/s41467-023-38473-x) and
- up to 6 bits (64 levels) by using a segmented configuration where the heater is constituted by InO3 patches above PCM patches driven with a single pair of wires (see Figure 4) (See C. Zhang et al., "Nonvolatile Multilevel Switching of Silicon Photonic Devices with In2O3/GST Segmented Structures," Adv. Opt. Mater., vol. 11, no. 8, p. 2202748, 2023, doi: 10.1002/adom.202202748).

The objective of using a segmented configuration was to create a larger temperature gradient than with respect to a continuous PCM patch and therefore increasing the number of levels by exploiting different pulse durations and powers. All these techniques rely on an out of equilibrium situation where the short pulse duration (hundreds of ns) is fundamental to achieve a specific set configuration. This adds a series of limitations to the driving circuitry in terms of pulse generation and required time discretization.

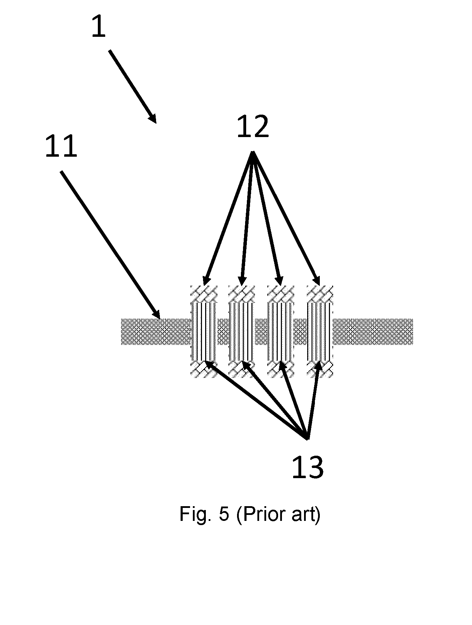

The standard procedure to achieve a mapping of the optical properties versus the electrical stimuli is to heat up the device with different input conditions e.g., different electrical pulse powers and durations and to record the transmission or phase shift induced. This allows to generate a look-up table to achieve e.g., a linear behavior of the device response as a function of the electrical power and pulse durations. The large number of possible combinations in terms of electrical powers and pulse durations lead often to sub-optimal driving conditions where it is not simple to achieve a sufficiently fine discretization of the PCM layer transition and therefore of the resulting optical properties. This is related to the fact that it is necessary to carefully set pulse durations which, depending on the stochastic character of the PCM as well, will provide a certain number of levels. This is even more cumbersome in geometries where uniform heaters are placed on top of the PCM patch. This configuration is typical of standard CMOS-compatible platforms for integrated photonics without the presence of PCMs. In this case the thermo-optic effect is used to reconfigure the waveguides. Although this solution may be more optimal from an energy consumption point of view, it does pose a series of limitations. Notably, the need for using short pulse durations (below $\mu$s) and also of having a fine-tuned discretization of the pulse duration which requires more complex circuitry, the number of levels that can be achieved due to the need to leverage only temperature gradients, the difficulty of achieving a linear optical response due to the connection between number of levels and device response i.e., a given PCM configuration changes the intrinsic optical properties of the cross-section, thereby changing in a non-linear manner (with respect to the input electrical energy) the device optical properties. While this aspect can be solved by performing a device mapping, it might restrict the effective number of levels that preserve linearity. Besides, this complexity requires a larger effort in testing campaigns at a system-level to guarantee that all the devices behave as expected due to the strong influence of the stochastic character in these configurations as well as of fabrication tolerances. Another solution that has been considered is to segment the PCM patch and to then connect for each segment a heater as in Figure 5 (See J. Meng et al., "Electrical programmable multilevel nonvolatile photonic random-access memory," Light Sci. Appl., vol. 12, no. 1, p. 189, Aug. 2023, doi: 10.1038/s41377-023-01213-3). While this approach achieves a 4-bit memory and linear modulation of the transmission of the device, it does need to use 15 heaters, one for each element with their respective drivers and digital-to-analog converters (DACs). Given the photonic device footprints (in this case 80 $\mu$m long) and the related footprint required by the heaters and wiring, this approach is not easily scalable to much larger number of levels. In fact, the number of heaters scales linearly with the number of levels to achieve.

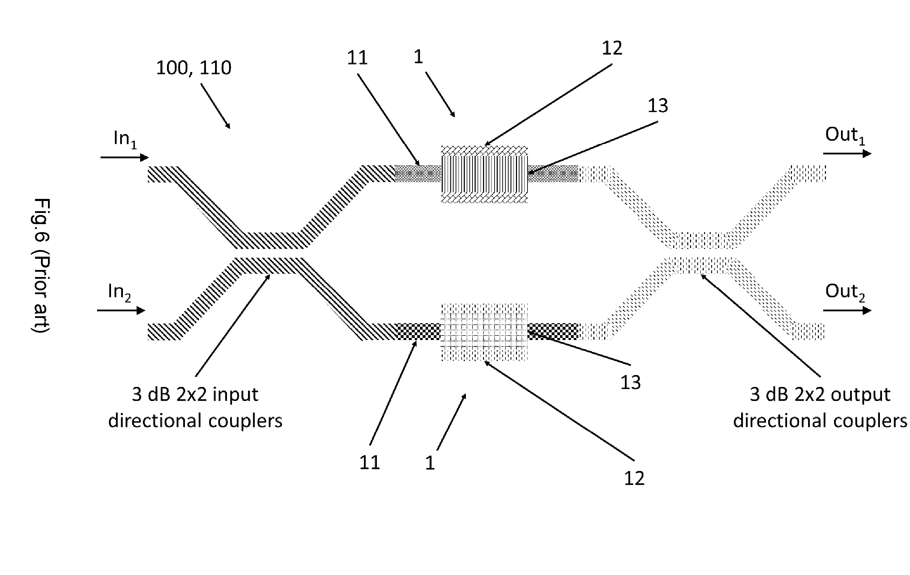

The configurations in Figure1 to Figure 5 can be used to build a Mach-Zehnder interferometer (MZI), a classical building block in photonics, that allows amplitude modulation at its output based on the respective states of the PCM patches in the 2 arms (as shown in M. Miscuglio et al., "Artificial Synapse with Mnemonic Functionality using GSST-based Photonic Integrated Memory," p. 8 and schematically in Figure 6).

In summary, the problem that this invention is aiming to solve consists of achieving a precise and reliable control of the phase change transition for optical waveguides incorporating a phase change material (PCM) patch by means of electro-thermal switching e.g., by means of heaters. Current approaches focus on a modulation of the power and duration of the electrical pulses to achieve different configurations with different ratios of amorphous and crystalline materials. Different ratios translate in different optical properties for the PCM patch. However, the number of levels that it is possible to achieve with these approaches is generally limited due to the stringent driving conditions which require a precise control of the pulse power and duration as well as due to the stochastic nature of the phase-change transition. These aspects hinder a high reliability and a high predictability (before testing) of the PCM patch behavior and its linear response as a function of the stimulus, therefore limiting the bit resolution (number of levels) achievable by these devices as well as putting constraints on the driving circuitry requirements which shall operate very precisely and rapidly. Besides, linearity of the encoded levels is not straightforward to achieve in classical configurations. Other solutions that rely on using multiple heaters and a segmented PCM patch to overcome these limitations lack of scalability as they increase linearly with the number of levels and of the required drivers and converters to transfer the electrical stimulus to the PCM patch. Optical approaches to switch the configuration of the PCM patch add complexity to the routing of the optical signals on the chip and pose several restrictions to the switching of the PCM patch.

**SUMMARY**

According to a first aspect, disclosed is a photonic multi-level device in accordance with the preamble given above, wherein at least one, potentially only one, among the waveguide, the PCM patch and the electro-thermal switching has a cross-section that varies along the main optical propagation direction.

Thus, the present invention deals with novel designs for photonic multi-level devices that permit to modify in a compact, multi-level, reliable, and controllable way the device optical response. This is achieved by means of novel device designs including a phase-change material (PCM) patch coupled with a compact driving approach based on an electro-thermal switching, e.g., a heater. The geometrical properties of the photonic cross-section along the propagation length set specific driving conditions to achieve a well-defined phase configuration (crystalline versus amorphous) of the PCM patch. Each configuration of amorphous versus crystalline sections corresponds to different device performance resulting into a multi-level discretization of the optical device response.

In some examples, the variation of the cross-section is at least partially continuous.

In some examples, the variation of the cross-section is at least partially discrete.

In some examples, the variation of the cross-section of the waveguide is continuous. The optical losses into the waveguide are thus advantageously limited.

In some examples, the variation of the cross-section of at least one among the PCM patch and the electro-thermal switching is discrete.

In some examples, the variation of the cross-section is monotonous, and varies preferably from a smaller width to a greater width along the main optical propagation direction.

In some examples, the variation of the cross-section is symmetrical relative to the main optical propagation direction. A better control of the multi-level discretization of the optical device response is thus achieved.

In some examples, the variation of the cross-section of the electro-thermal switching is discrete, and the cross-section of the PCM patch and/or the waveguide is preferably constant.

In some examples, a thickness of the PCM patch is lower than a thickness of the waveguide.

In some examples, the photonic multi-level device further comprises a digital-to-analog converter and a driver connected to said electro-thermal switching.

In some examples, the PCM patch is made of one among: germanium monoselenide (GeSe) and Ge-Sb-Se-Te (GSST).

According to a second aspect, disclosed is a photonic system comprising at least one photonic multi-level device as introduced above.

In some examples, the photonic system is chosen among: a Mach-Zehnder interferometer, a photonic crystal, a microring modulator, a crossing, a multi-mode interference (MMI) system, an arrayed waveguide grating (AWG), a grating coupler, an adiabatic coupler and a directional coupler.

Other objects, features and advantages of the invention(s) disclosed herein, and their various embodiments/aspects, may become apparent in light of the description of some exemplary embodiments that follows.

**BRIEF DESCRIPTION OF THE DRAWINGS**

Reference will be made in detail to embodiments of the disclosure, non-limiting examples of which may be illustrated in the figures of the accompanying drawings. Some figures may be in the form of diagrams. Some elements in the figures may be exaggerated; others may be omitted, for illustrative clarity.

Any text (legends, notes, reference numerals and the like) appearing on the drawings are incorporated herein by reference.

FIG. 1: Previous art: Top view of a waveguide with a PCM patch integrated above the waveguide and a heater placed on top of the PCM patch;
FIG. 2: Previous art: Top view of a waveguide with a PCM patch integrated above the waveguide and a pair of heaters placed laterally next to the PCM patch;

FIG. 3: Previous art: Top view of a waveguide with a PCM patch integrated above the waveguide and a heater built by doping a portion of etched silicon forming the rib waveguide and injecting current orthogonally to the optical propagation direction, thus using the waveguide as a resistor;

FIG. 4: Previous art: Top view of a waveguide with multiple PCM patches integrated above the waveguide and a segmented heater covering each PCM patch. The multiple patches receive the same electrical signals from a single pair of wires;

FIG. 5: Previous art: Top view of a waveguide with multiple PCM patches integrated above the waveguide and with multiple independent heaters on top of each PCM patch;

FIG. 6: Previous art: 2x2 MZI configuration with PCM patches integrated on the 2 arms of the MZI with heaters above where no change of cross-section is carried out along the PCM patch length;

FIG. 7: Cross-sections that can be considered for the present invention where a Si layer is the guiding material and the optical mode is influenced by the presence of the PCM layer. (a) Strip waveguide with optical mode confined in the higher permittivity material. (b) Slot waveguide with optical mode confined in between the higher permittivity materials a rib waveguide cross-section. (c) A rib waveguide cross-section. (d) An inverted rib cross-section;

FIG. 8: Top view of the various approaches that can be used to microstructure the cross-section along the propagation direction;

FIG. 9: Top-view (a) and cross-section views for a PCM patch that has been partially amorphized (b) and partially left in its initial crystalline state (c).

FIG. 10: Side-view showing how the light propagates through the structure and how the digital-to-analog (DAC) converter and the driver are connected to the heater;

FIG. 11: Top view of 2x2 MZI configuration where the approach with a discretized PCM patch is used;

FIG. 12: Density of power dissipated to reach the melting temperature for GeSe (+/- 1 degree) versus heater width. The PCM patch is 1 $\mu$m wide and 50 nm thick;

FIG. 13: GeSe patch temperature versus time as a function of different heater widths and for different power densities (see Figure 12). The cooling speed is not affected by small changes of the heater width. Here the curves overlap each other although using different power densities, respectively 5.58, 6.325, and 6.9 mW/$\mu$m for 1, 1.5 and 2-$\mu$m-wide heaters;

FIG. 14: GeSe patch temperature versus time as a function of different thicknesses and same power density: 5.85 mW/$\mu$m. The patch thickness does not strongly affect the cooling speed; and

FIG. 15: Illustration of the methodology to define the specific design for the example chosen of the segmented heater 13 (see Figure 8(a)).

## DETAILED DESCRIPTION

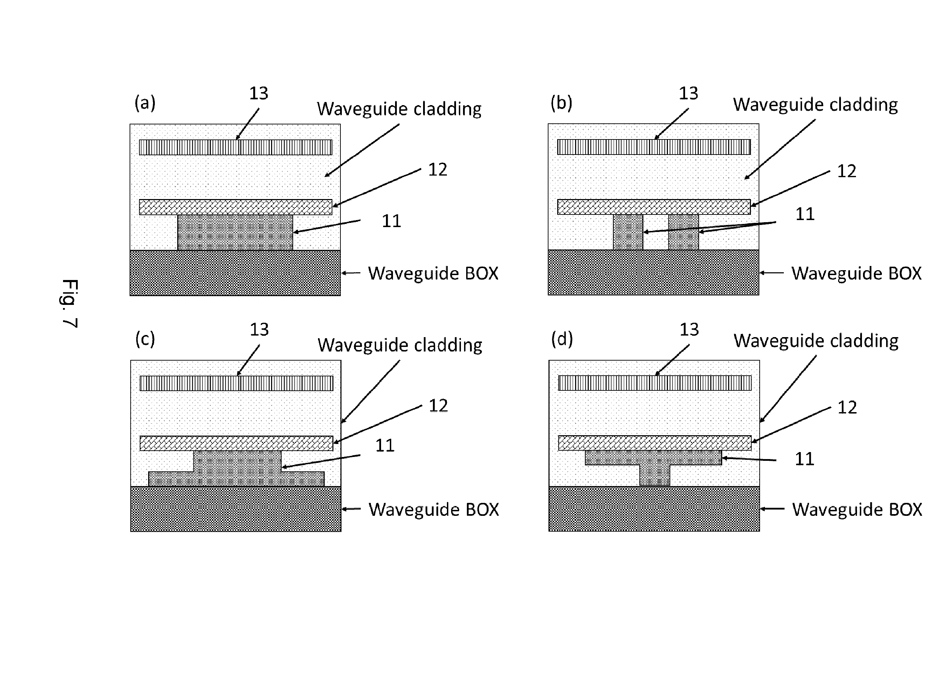

To achieve a large, controllable, and reliable number of levels for PCM patches 12 integrated on top of waveguides 11 and switched by means of an electrical heater 13, the present invention proposes to use a change in at least one geometrical property of the cross-section of at least one among the waveguide 11, the PCM patch 12 and the heater 13 along the propagation direction 10 of the light in the optical waveguide. Different cross-sections (as in Figure 7) supporting guided modes are suitable for the approach here detailed. In particular, a classical strip waveguide cross-section (see Figure 7(a)) where the light is confined in the higher permittivity material; a slot waveguide cross-section (see Figure 7(b)) where the light is confined in between the higher permittivity material regions; a rib waveguide cross-section (see Figure 7(c)) where the light is confined in the central thicker region of higher permittivity, or an inverted rib cross-section (see Figure 7(d)) where the light is confined in the central thicker region of higher permittivity as well as derived waveguide cross-sections supporting guided optical modes that can interact with a PCM layer 12 can be used to implement the approach here presented.

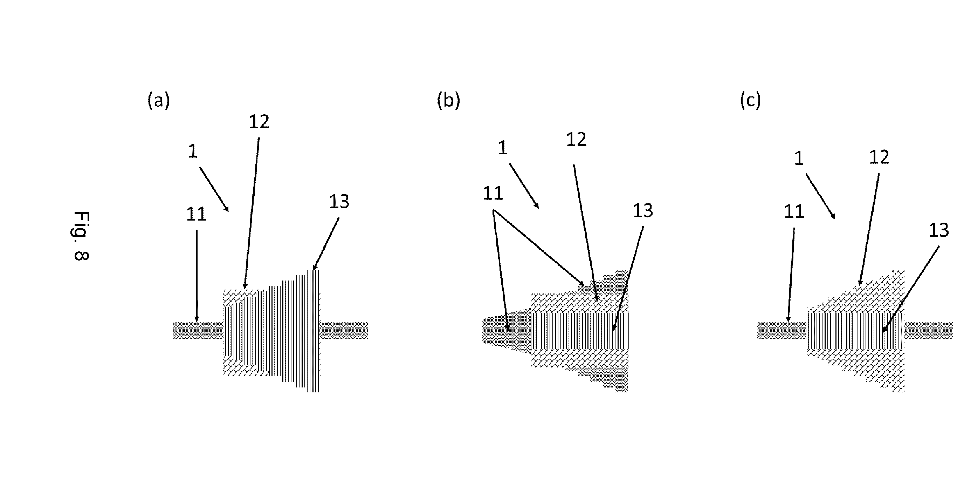

This approach which consists of the modification of the cross-section along the propagation direction 10 permits to achieve a different set of conditions for the PCM transition depending on the cross-section geometry. This modification can be either continuous or discrete as in Figure 8 where the cross-section is segmented in multiple portions. More specifically, this approach can be implemented either for the heater geometry (see Figure 8(a)), the optical waveguide geometry, chosen as a strip waveguide 11 (see Figure 8(b)) although all the cross-sections in Figure 7 could be potentially used, or the PCM patch geometry depending on the specific material properties of each layer (see Figure 8(c)).

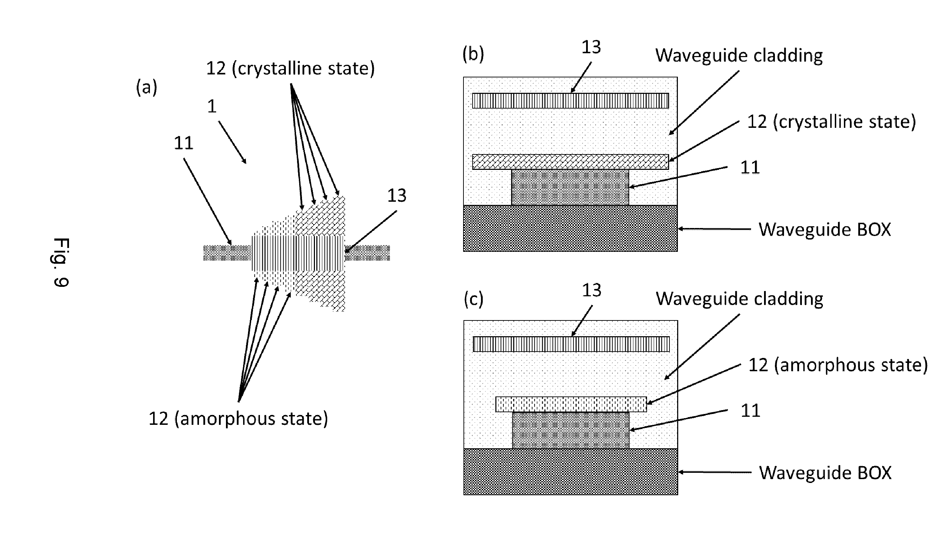

It is worth to notice that such a modification shall not lead to a major increase on the optical losses of the device 1 to avoid corrupting its intended operation and scope in the system 100. The effect of a modification of the geometrical cross-section along the propagation direction 10 has an impact on the thermal behavior of the PCM patch 12 as a function of the dissipated power. For example, a wider PCM patch or heater cross-section demands for a larger power consumption as observed in simulation results. In the configuration of Figure 8(c) only the cross-sections that have a heater width that allows to achieve the threshold temperature will experience a phase change, while the others will remain in their previous state as schematically shown in Figure 9 where a portion of the PCM patch 12 has transitioned to an amorphous phase, while the remainder is still in a crystalline state because the wider PCM patch cross-section requires more power to reach the melting temperature.

By achieving N-1 portions with different cross-sections, it is possible to obtain N levels for the specific driving conditions. This approach requires only a single heater 13 and therefore it simplifies several aspects from a point of view of routing, pads and routing footprint as well as electronic drivers given that only a single DAC 14 is required for the driving. Latent heat plays a negligible role in our configuration due to the electrical switching mechanism where only a minor portion of heat needs to be provided to the patch compared to the overall heat provided to the entire dielectric surroundings.

Besides, the fact that the conditions are set by geometry allows for a much more reliable and precise control of the phase transition because only the waveguide portions with e.g., a specific heater width will contribute to the change of optical properties and therefore the electrical pulses can be much longer as their duration is not anymore critical as it was previously the case. A longer electrical pulse duration will also be beneficial to augment the probability that the entire section, meant to achieve a phase transition, has done so. Only their power level will matter thereby also simplifying the underlying circuitry which can operate at low speed. This is a major improvement as it allows to have the driving electronic systems much simpler compared to previous approaches that cannot be easily scalable in terms of high-speed electrical I/O. The approach here proposed can be also used with short pulses where a benefit in energy consumption could be achieved, while still retaining the geometric constraint and linearity/number of levels benefits of the device 1.

Due to the heater's position above the waveguide, this approach allows to better discretize the PCM patch configuration than relying on gradual changes of the PCM state along its thickness. This is especially relevant for thin PCM thicknesses e.g., sub-100 nm where the grain size can be comparable.

This approach applies to all types of PCMs and to any dielectric thickness as long as the properties for the phase change transition are satisfied in terms of temperature to reach (i.e., driving conditions) as well as cooling speed. From a device point of view, designs where the PCM patch 12 is thin with respect to the thickness of the optical waveguide 11 can be more efficient because they can lead to a more distributed interaction which can results in a larger number of levels. The number of levels is limited by grain dimensions as well as the resolution of the lithographic process and the overall length of the PCM patch 12 that is required to achieve the desired optical properties. A much weaker influence on the stochastic character of the transition is here present thanks to the favorable partitioning of the thermal conditions on the PCM patch 12.

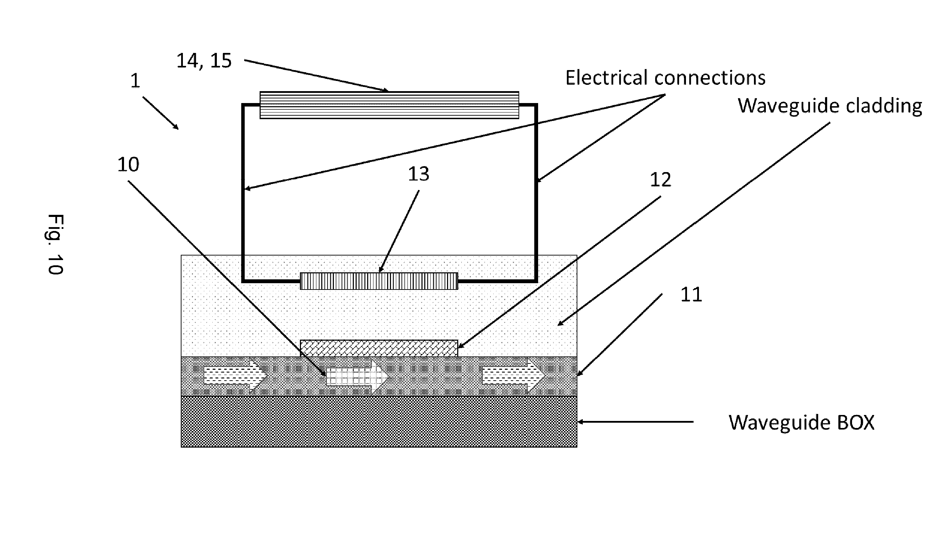

With this approach, the PCM patch 12 will therefore be switched by a single heater 13 connected to a digital-to-analog converter (DAC) 14 and an associated driver 15 as schematically shown in Figure 10. The final resolution will therefore be limited by the DAC resolution, but this number can be as high as 16 bits which represents a fine enough discretization (65536 levels) for the large majority of applications of interest of this type of devices 1.

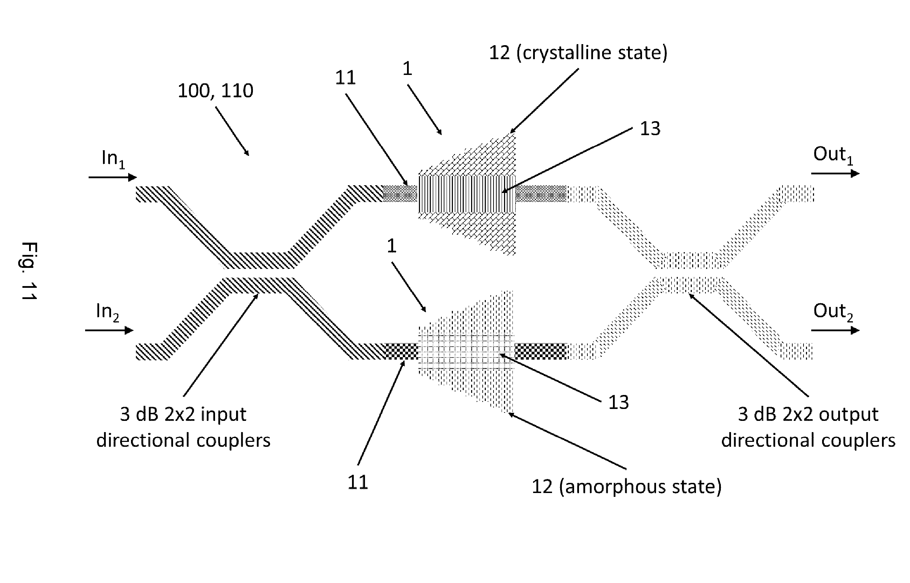

Such optical waveguide 11 with an integrated PCM patch 12 and with a discretized cross-section can be inserted in more complex systems 100 such as a Mach-Zehnder interferometer (MZI) 110, a basic building blocks in integrated photonics, to enable a modulation of the optical transmission by achieving a relative phase difference $\Delta\varphi$ in the two arms of the interferometer 110 as schematically indicated in Figure 11 for the strip configuration discussed in Figure 9. Depending on the applications, the required phase shift difference between the two arms that might be needed in the MZI 110 can be either $\pi$ or $2\pi$ radians. This phase difference given by $\Delta\varphi = \frac{2\pi}{\lambda_0}(n_{eff}^c - n_{eff}^a)L_{pcm}$ sets the required length $L_{pcm}$ for the PCM patch 12 which depends on the effective refractive index differences between the two PCM patches 12 when fully in crystalline $n_{eff}^c$ and amorphous $n_{eff}^a$ phases for a wavelength $\lambda_0$. A thinner PCM patch 12 could increase the required length for a $\pi$ shift and therefore allow for more levels.

The present invention does not limit its scope of applicability to the MZI configuration, but it can be applied to other photonic systems 100 such as photonic crystals, microring modulators, crossings, multi-mode interference (MMI) devices, arrayed waveguide gratings (AWGs), grating couplers, adiabatic couplers, directional couplers. In general, any photonic system 100 that integrates a PCM layer 12 and that requires multi-level operation and electrical driving can benefit from the present invention.

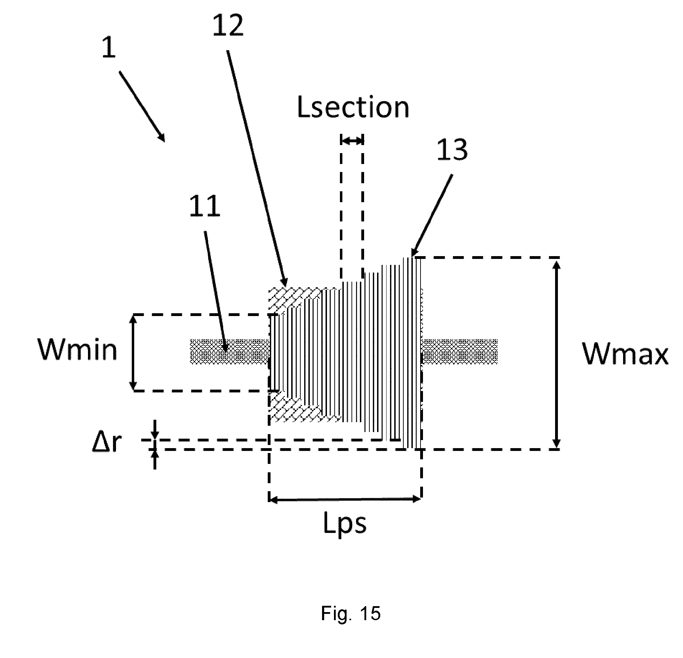

With reference to Figure 15, the methodology to define the specific design depends on the element that shall be modified. For the example chosen of the segmented heater 13 (see Figure 8(a)), it is first necessary to determine the minimum ($w_{min}$) and maximum dimensions ($w_{max}$) in the process for this layer. Secondly, it is necessary to determine the length (in the propagation direction 10) of each of the heater's elements. The larger the number of the elements required (number of elements equal to number of levels -1), the shorter each element will be (in the propagation direction 10). Given a defined resolution for the process of the minimum feature achievable e.g., $\Delta r$, then the largest number of elements $N_{levels}$ that can be achieved is $N_{levels} = [(w_{max} - w_{min})/(2 \cdot \Delta r)]$ where the squared parenthesis indicates an integer division. Once determined the maximum number of levels, we can obtain the length for each section along the propagation direction 10.

For a linear mapping of the electrical power to drive the heater 13 (assuming a constant resistance as a function of the power and temperature) over the phase shift, it is necessary to take $L_{section} = L_{ps}/N_{levels}$ where $L_{ps}$ is the phase shifter length that is required in the application e.g., to obtain a $\pi$ phase shift in the optical field.

For the width of each section, this is a linear function (or non-linear if a non-linear resistance as a function of the temperature shall be taken into consideration) and $w_n = (w_{max,int} - w_{min}) / N_{levels} * n + w_{min}$ where n is the number of the level starting from 0 to $N_{levels}$ -1 and $w_{max,int}$ is the value that provides an integer in the formula to extract $N_{levels}$ without applying the integer division operation. Given this definition, $w_{max,int}$ is always equal or smaller than $w_{max}$.

Taking into account a linear dependence of the resistance as a function of the temperature, the full resistance obtained is $R = \sum_{i=0}^{Nlevels - 1} R_i$ and therefore, for the first Ohm's law, the current I = V/R where V is the voltage applied at the extremes of the heater 13.

The power dissipated in each element is $P_i = I^2 R_i$ and by taking the second Ohm's law $R = \frac{\rho \cdot l}{h \cdot w_i} = k / w_i$ where $k$ is a constant common to all the elements equal to $k = \frac{\rho \cdot l}{h}$ with $h$ the thickness of the heater layer 13, and $l$ equal to $l_i$ the length of each element which here is taken, in a linear approximation, equal to all of them.

This methodology allows to set the width and the length of each element provided the number of levels that shall be achieved and the resolution as well as the maximum feature size (widths) for the heater 13. If a lower number of levels is required, it is sufficient to modify $N_{levels}$ and therefore the minimum increment $2 \cdot \Delta r$ and $w_{max,int}$ depending on the required power consumption.

The following is a proof of concept obtained by simulations; it should not be construed as limitative of the claimed invention.

Simulations demonstrate that the present concept can indeed be applied to a PCM patch 12 chosen to be 50 nm thick GeSe embedded on top of a 300 nm thick, 400 nm wide Silicon strip waveguide 11 as in Figure7(a) and discretized along the propagation direction 10 as in Figure 8(c). The waveguide cladding and buried oxide (BOX) material is Silicon dioxide, while the substrate material is Silicon. This is a typical SOI cross-section where the heater 13 is chosen to be placed at 600 nm from the top of the Silicon waveguide 11.

The software tool that has been used is the numerical suite by ANSYS and for the thermal simulations the HEAT solver. The HEAT module allows to solve the transport equation for an arbitrary material distribution provided the various parameters such as thermal conductivity and specific heat are provided. In Table 1, the thermal parameters that have been used for the simulations are provided. The simulations are carried out in 2D given that the cross-section slowly changes in the propagation length direction 10. Fixed boundary conditions all around the simulation window at 20 Celsius degrees have been set after convergence studies to evaluate the window dimension. A minimal timestep of 1 ns has been used with electrical pulses of 8 $\mu$s allowing to reach equilibrium of the thermal response. As mentioned above, this aspect is not critical but depends on the driving circuitry available. Shorter pulses could be used without hindering the underpinning approach here presented.

Table 1: Material parameters used for the thermal simulations. The parameters were already defined within the numerical HEAT module apart from GeSe crystalline parameters

| Material | P [kg/m$^3$] | $C_p$ [J/kg·K] | $K_{th}$ [W/m·K] |
| --- | --- | --- | --- |
| GeSe crystalline | 5520 [14] | 329 [14] | 2.06 [15] |
| TiN | 5210 | 29 | 388 |
| Air | 1.17 | 1006 | 0.026 |
| Silicon | 2330 | 711 | 148 |
| Silicon dioxide | 2203 | 709 | 1.38 |

Although the simulations neglect the latent heat due to a limitation of the simulation tool, the approach here proposed is still valid as only a bias in terms of power shall be added e.g., a larger electrical power shall be dissipated to take into account the latent heat of fusion when going from crystalline to amorphous states. A minor influence on the cooling time shall be also expected given that a portion of the PCM patch 12 will not experience phase change due to its larger width. The cooling time can be reduced in multiple ways such as reducing the BOX thickness if it becomes a problem.

To remove the influence of latent heat from neighboring regions, a small gap in the PCM patch 12 can be considered where the PCM region that is meant to transition will be sufficiently far away to not be influenced by other PCM regions that are expected to transition as well. This will influence the optical losses that depending on the thickness of the PCM patch 12 and the applications can be detrimental or affordable.

GeSe is an ideal candidate material to implement transparent phase shifters thanks to its very low losses in both crystalline and amorphous phases (See R. Soref et al., "Electro-optical switching at 1550 nm using a two-state GeSe phase-change layer," Opt. Express, vol. 23, no. 2, p. 1536, Jan. 2015, doi: 10.1364/OE.23.001536). Its refractive index contrast allows to achieve $\pi$ phase shifters with lengths above 100 $\mu$m depending on the GeSe patch thickness and waveguide configuration. Therefore, the present invention allows to reach above 100 levels with a sole driving element and with very low optical losses. Other PCMs material such as GSST also achieve high transparency in both phases around 1550 nm (See M. Miscuglio et al., "Artificial Synapse with Mnemonic Functionality using GSST-based Photonic Integrated Memory," p. 8). Such low-loss large number of levels phase shifters are a key requirement to map for example memory states or synaptic weights onto this PCM-integrated waveguides rather than using heaters as done in Y. Shen et al., "Deep learning with coherent nanophotonic circuits," Nat. Photonics, vol. 11, no. 7, pp. 441-446, Jul. 2017, doi: 10.1038/nphoton.2017.93. The cross-section that was chosen in simulation allows also to achieve cooling speeds (near 0.6 K/ns) which shall permit to avoid a re-crystallization of the PCM material. However, the present invention does not exclude geometries where the cooling speed can be further increased without affecting the invention here proposed e.g., the buried-oxide layer to guarantee the confinement of the waveguide mode can be made thinner for example without necessarily compromising the optical performance of the device 1, but greatly increasing the cooling speed as seen in simulation.

Concerning the physical properties of GeSe, the melting temperature $T_{melt}$ that shall be achieved is as high as 675°C (See H. Wiedemeier and P. A. Siemers, "The thermal expansion and high temperature transformation of GeSe," Z. Für Anorg. Allg. Chem., vol. 411, no. 1, pp. 90-96, Jan. 1975, doi: 10.1002/zaac.19754110110), while the glass temperature is as low as 295°C (See J. Pries, S. Wei, M. Wuttig, and P. Lucas, "Switching between Crystallization from the Glassy and the Undercooled Liquid Phase in Phase Change Material Ge2Sb2Te5," Adv. Mater., vol. 31, no. 39, p. 1900784, 2019, doi: 10.1002/adma.201900784). Therefore, the electrical power that allows to reach $T_{melt}$ has been taken as value for a given heater width.

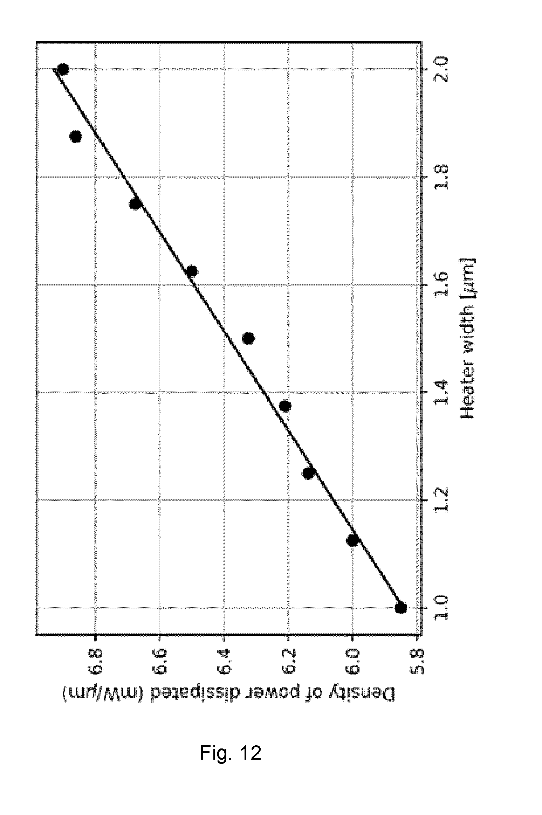

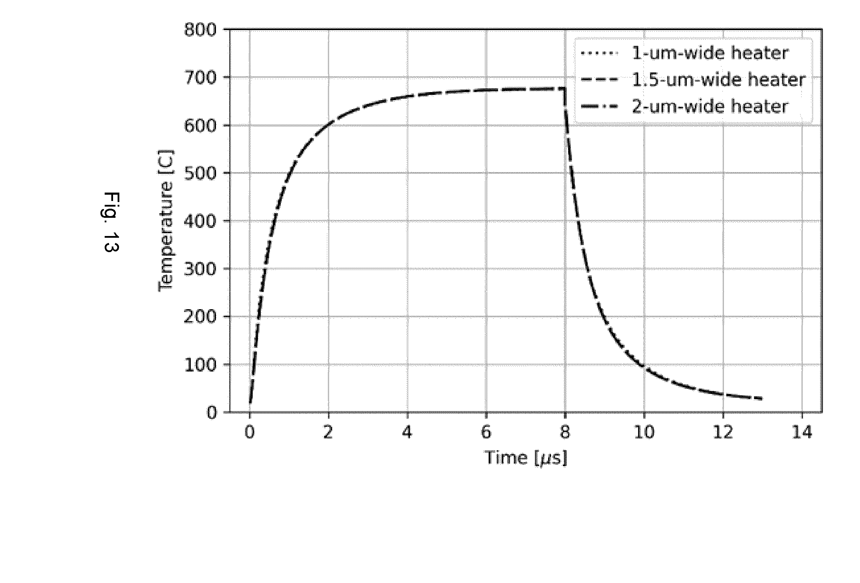

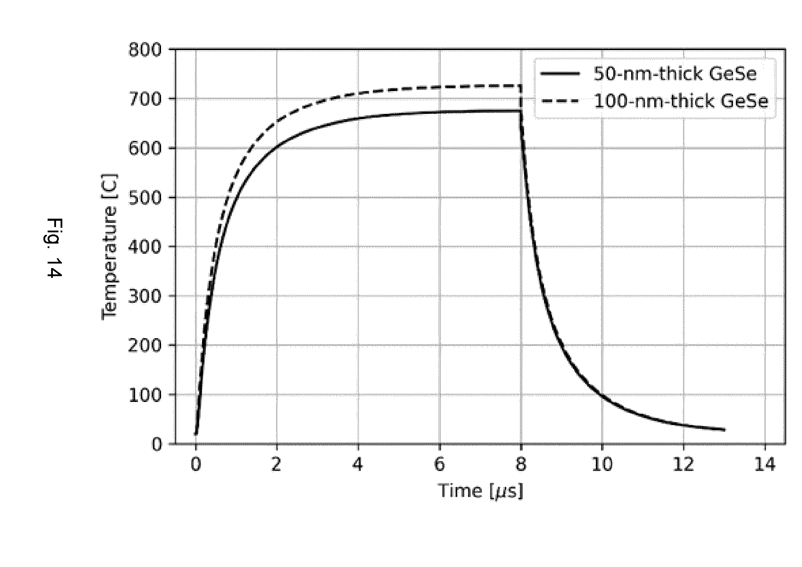

Figure 12 shows the dependence of the electrical power density dissipated in the heater 13 (assuming 100% conversion electrical to thermal by Joule effect in the heater) as a function of the heater width. This dependence is linear for heater widths that are larger than the GeSe patch 12 thanks to the low thermal conductivity of GeSe. Fluctuations of the power levels with respect to the straight line are related to simulation accuracy. The cooling time is not substantially affected by a different heater width as shown in Figure 13, nor by using different thicknesses for the GeSe patch 12 as shown in Figure 14.

Therefore, the mapping of the weights becomes a linear function of the electrical power (if arranged as in Figure 8) i.e., $f(P_{elec}) = N_{levels}$ where $P_{elec}$ is the dissipated power to switch from e.g., crystalline to amorphous, a number of levels $N_{levels}$.

While this approach allows to achieve an easier encoding with longer pulses reaching a steady state, it can also be implemented with shorter pulses allowing to reach a specific temperature depending on the thermal dynamics as observed in Figure 13.

Table 2: Parameters used for the 2D thermal simulations

| Parameter | Dimension [nm] |
| --- | --- |
| Si waveguide width | 400 |
| Si waveguide height | 300 |
| GeSe PCM thickness | 50 |
| TiN heater gap | 550 |
| TiN heater thickness | 70 |
| SiO2 cladding above heater | 2000 |
| SiO2 Buried Oxide | 500 |
| Simulation window width | 8350 |
| Simulation window height | 4350 |

The advantages of the here proposed approach consist of reaching a very fine-grain discretization of the optical performance with a single electrical driving device in a reliable, compact, and controllable manner by leveraging different thermal properties in different sections along the propagation direction 10 of a single continuous optical waveguide 11. This is in contrast with other electro-thermal approaches e.g., by means of heaters 13 that are more subject to the statistical nature of the phase change transition in the PCM layer 12 and where no optical or thermal difference with respect to the cross-section is present in the device 1 along the propagation direction to force different PCM patch configurations. The here proposed approach allows only the driving on a single element e.g., heater 13 to set all the different configurations allowing to span several levels and to encode a larger number of bits of information. Moreover, the encoding can be carried out in a linear way and does not require to have high speed circuitry or precise timing for the electrical stimuli.

The embodiments and aspects of the here detailed disclosure may be described and illustrated in conjunction with systems and devices which are meant to be exemplary and illustrative, not limiting in scope. Specific configurations and details may be set forth to provide an understanding of the disclosure. However, it should be apparent to one skilled in the art that the disclosure may be practiced without some of the specific details being presented herein. Furthermore, some well-known steps or components may be described only generally, or even omitted, for the sake of illustrative clarity.

Reference may be made to disclosures of prior publications. Some text and drawings from those sources may be presented herein, but may be modified, edited or commented to blend more smoothly with the disclosure of the present application. Citation or identification of any reference should not be construed as an admission that such reference is available as prior art to the disclosure.

For the purposes of promoting an understanding of the principles of various embodiments of the disclosure, reference has been made to preferred embodiments illustrated in the drawings, and specific language has been used to describe these embodiments. However, no limitation of the scope of the disclosure is intended by this specific language, and the disclosure should be construed to encompass all embodiments that would normally occur to one of ordinary skill in the art.

**Claims**

1. A photonic multi-level device (1) comprising:

   a. a waveguide (11) into which light is dedicated to travel along a main optical propagation direction (10),
   b. a phase change material patch (12), hereafter PCM patch, on the waveguide (11),
   c. an electro-thermal switching (13), e.g., a heater, in the vicinity of said PCM patch (12),

   wherein at least one, potentially only one, among the waveguide (11), the PCM patch (12) and the electro-thermal switching (13) has a cross-section that varies along the main optical propagation direction (10).

2. The photonic multi-level device (1) according to claim 1, wherein the variation of the cross-section is at least partially continuous.

3. The photonic multi-level device (1) according to anyone of previous claims, wherein the variation of the cross-section is at least partially discrete.

4. The photonic multi-level device (1) according to anyone of previous claims, wherein the variation of the cross-section of the waveguide (11) is continuous.

5. The photonic multi-level device (1) according to anyone of previous claims, wherein the variation of the cross-section of at least one among the PCM patch (12) and the electro-thermal switching (13) is discrete.

6. The photonic multi-level device (1) according to anyone of previous claims, wherein the variation of the cross-section is monotonous, and varies preferably from a smaller width to a greater width along the main optical propagation direction (10).

7. The photonic multi-level device (1) according to anyone of previous claims, wherein the variation of the cross-section is symmetrical relative to the main optical propagation direction (10).

8. The photonic multi-level device (1) according to claims 5 to 7, wherein the variation of the cross-section of the electro-thermal switching (13) is discrete, and wherein the cross-section of the PCM patch (12) and/or the the waveguide (11) is preferably constant.

9. The photonic multi-level device (1) according to anyone of previous claims, wherein a thickness of the PCM patch (12) is lower than a thickness of the waveguide (11).

10. The photonic multi-level device (1) according to anyone of previous claims, further comprising a digital-to-analog converter (14) and a driver (15) connected to said electro-thermal switching (13).

11. The photonic multi-level device (1) according to anyone of previous claims, wherein the PCM patch (12) is made of one among: germanium monoselenide (GeSe) and Ge-Sb-Se-Te (GSST).

12. A photonic system (100) comprising at least one photonic multi-level device (1) according to anyone of previous claims.

13. The photonic system (100) according to the previous claim, wherein the photonic system (100) is chosen among: a Mach-Zehnder interferometer (110), a photonic crystal, a microring modulator, a crossing, a multi-mode interference (MMI) system, an arrayed waveguide grating (AWG), a grating coupler, an adiabatic coupler and a directional coupler.

1

11

12

13

Fig. 1 (Prior art)

1

11

13

12

Fig. 2 (Prior art)

Fig. 3 (Prior art)

Fig. 4 (Prior art)

1

11

12

13

Fig. 5 (Prior art)

Fig.6 (Prior art)

Fig. 7

Fig. 8

Fig. 9

Fig. 10

14, 15

1

10

13

Electrical connections

Waveguide cladding

12

11

Waveguide BOX

EP 4 614 216 A1

18

Fig. 11

EP 4 614 216 A1

Fig. 12

Fig. 13

Fig. 14

Fig. 15

Europäisches Patentamt
European Patent Office
Office européen des brevets

# EUROPEAN SEARCH REPORT

**Application Number**

EP 24 31 5084

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TRIPATHI DEVDUTT ET AL: "Recent developments in Chalcogenide phase change material-based nanophotonics", NANOTECHNOLOGY, INSTITUTE OF PHYSICS PUBLISHING, BRISTOL, GB, vol. 34, no. 50, 28 September 2023 (2023-09-28), XP020479790, ISSN: 0957-4484, DOI: 10.1088/1361-6528/ACF1A7 [retrieved on 2023-09-28] * the whole document * | 1,2,4,6, 7,9-13 | INV. G02F1/01 |
| X | LIAN CHUANYU ET AL: "Photonic (computational) memories: tunable nanophotonics for data storage and computing", NANOPHOTONICS, vol. 11, no. 17, 16 May 2022 (2022-05-16), pages 3823-3854, XP093052588, DOI: 10.1515/nanoph-2022-0089 * the whole document * | 1,3,5,8 | |

**TECHNICAL FIELDS SEARCHED (IPC)**

G02F

The present search report has been drawn up for all claims

| Place of search | Date of completion of the search | Examiner |
|---|---|---|
| The Hague | 30 May 2024 | Topak, Eray |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **T. TAUBNER**. Phase-change materials for non-volatile photonic applications. *Nat. Photonics,*, 08 August 2017, vol. 11 (8)
- **M. WUTTIG** ; **N. YAMADA**. Phase-change materials for rewriteable data storage. *Nat. Mater.*, November 2007, vol. 6 (11), 824-832
- **J. FELDMANN et al.** Parallel convolutional processing using an integrated photonic tensor core. *Nature*, January 2021, vol. 589 (7840), 52-58
- **C. RIOS et al.** Integrated all-photonic non-volatile multi-level memory. *Nat. Photonics*, November 2015, vol. 9 (11), 725-732
- **W. ZHOU et al.** In-memory photonic dot-product engine with electrically programmable weight banks. *Nat. Commun.*, May 2023, vol. 14 (1), 2887
- **J. FELDMANN** ; **N. YOUNGBLOOD** ; **C. D. WRIGHT** ; **H. BHASKARAN** ; **W. H. P. PERNICE**. All-optical spiking neurosynaptic networks with self-learning capabilities. *Nature*, May 2019, vol. 569 (7755), 208-214
- **C. RÍOS et al.** Integrated all-photonic non-volatile multi-level memory. *Nat. Photonics*, November 2015, vol. 9 (11), 725-732
- **C. ZHANG et al.** Nonvolatile Multilevel Switching of Silicon Photonic Devices with In2O3/GST Segmented Structures. *Adv. Opt. Mater.*, vol. 11 (8), 2202748
- **M. MISCUGLIO et al.** *Artificial Synapse with Mnemonic Functionality using GSST-based Photonic Integrated Memory*, 8
- **C. ZHANG et al.** Nonvolatile Multilevel Switching of Silicon Photonic Devices with In2O3/GST Segmented Structures. *Adv. Opt. Mater.*, 2023, vol. 11 (8), 2202748
- **J. MENG et al.** Electrical programmable multilevel nonvolatile photonic random-access memory. *Light Sci. Appl.*, August 2023, vol. 12 (1), 189
- **M. MISCUGLIO et al.** *Artificial Synapse with Mnemonic Functionality using GSST-based Photonic Integrated Memory* (8)
- **R. SOREF et al.** Electro-optical switching at 1550 nm using a two-state GeSe phase-change layer. *Opt. Express*, January 2015, vol. 23 (2), 1536
- **Y. SHEN et al.** Deep learning with coherent nanophotonic circuits. *Nat. Photonics*, July 2017, vol. 11 (7), 441-446
- **H. WIEDEMEIER** ; **P. A. SIEMERS**. The thermal expansion and high temperature transformation of GeSe. *Z. Für Anorg. Allg. Chem.*, January 1975, vol. 411 (1), 90-96
- **J. PRIES** ; **S. WEI** ; **M. WUTTIG** ; **P. LUCAS**. Switching between Crystallization from the Glassy and the Undercooled Liquid Phase in Phase Change Material Ge2Sb2Te5. *Adv. Mater.,*, 2019, vol. 31 (39), 1900784